# EUROPEAN PATENT SPECIFICATION

(11) **EP 1 380 190 B1**
(45) Date of publication and mention of the grant of the patent: **22.09.2004**
(21) Application number: 02720205.0
(22) Date of filing: 11.04.2002
(51) Int. Cl.: H05B 3/74

(54) **RADIANT ELECTRIC HEATER**
ELEKTRISCHER STRAHLUNGSHEIZKÖRPER
APPAREIL DE CHAUFFAGE ELECTRIQUE RADIANT

(30) Priority: 17.04.2001 GB 0109339
(43) Date of publication of application: 14.01.2004
(73) Proprietor: Ceramaspeed Limited, Kidderminster, Worcestershire DY11 7DY (GB)
(72) Inventor: COLEMAN, Gavin John, Bromsgrove, Worcestershire B60 4EH (GB)
(74) Representative: Jackson, Derek Charles
(86) International application number: PCT/GB2002/001709
(87) International publication number: WO 2002/085073

(56) References cited:
- EP-A- 1 091 177
- FR-A- 1 391 052

## Description

This invention relates to a radiant electric heater of the type in which one or more radiant electric heating elements is or are supported relative to a base of thermal insulation material which may particularly be microporous thermal insulation material. For example, the invention relates to such a heater for use in cooking appliances, such as ovens, especially microwave ovens.

EP-A-1 091 177, the closest prior art, describes an electric oven having a cavity for receiving one or more items to be heated, and a radiant electric heater incorporating at least one heating element. The heater is supported at a wall of the cavity and has a face directed towards the cavity for radiating heat into the cavity from the at least one heating element.

The face of the heater is covered by a light-permeable sheet spaced from the heating element, the sheet being in the form of a fabric which may comprise filaments or a lattice of glass, ceramic or metal.

FR-A-1 391 052 describes a bell shaped protective covering with a radiant electric heater supported in the top of the covering. An apertured plate is supported by spacer means below the electric heater.

In GB-A-2 331 688, a radiant electric heater is described which is particularly applicable to grills and ovens, such as microwave ovens, and in which a heating element is supported relative to a base of thermal insulation material, such as microporous thermal insulation material, provided in a dish-like support. A peripheral wall of thermal insulation material is provided, which may be integral with the base.

A covering sheet in the form of a fabric comprising glass or ceramic filaments overlies the heater in contact with the peripheral wall and an apertured sheet, such as of metal, is provided overlying, and in contact with, the covering sheet.

The covering sheet serves to prevent particulates, such as splattered food particles, which may be emitted during cooking of food, from entering the heater and contaminating the heating element and/or the base layer. It also prevents any loose particles of thermal insulation material of the base in the heater from falling into a cooking cavity and contaminating food therein, particularly when the heater is installed in a top wall of an oven or grill.

The apertured sheet, such as of metal, minimises risk of mechanical damage to the covering sheet and internal components of the heater, such as during cleaning of an appliance incorporating the heater. When of metal, it also serves as a microwave radiation screen when the heater is installed in a microwave oven.

A problem has arisen, particularly when such a heater is provided as a grill heater in a microwave oven, or in an oven including convection heating. In practice, a grill heater provided in such an oven may receive infrequent use.

When microwave or convection heating is used without simultaneous operation of the grill heater, the relatively cold grill heater becomes exposed to water vapour issuing from food being cooked. Such water vapour passes through the apertured sheet, such as of metal, overlying the grill heater and condenses on the inside of this apertured sheet. The apertured sheet is in contact with the covering sheet of the fabric comprising glass or ceramic filaments which is, in turn, in contact with the peripheral wall of the thermal insulation material.

The water vapour condensing on the apertured sheet is wicked by the fabric covering sheet into the peripheral wall of thermal insulation material. Particularly when the peripheral wall comprises microporous thermal insulation, absorption of water therein results in permanent damage to the structure of the insulation material. This is in contrast to exposure of the insulation material to water vapour, which does not result in damage to the structure of the insulation material.

It is an object of the present invention to overcome or minimise this problem.

According to the present invention there is provided a radiant electric heater comprising: a base layer of thermal insulation material; at least one heating element supported relative to the base layer; a peripheral wall of thermal insulation material; a covering sheet of fabric material overlying the at least one heating element and the peripheral wall; and an apertured member overlying the covering sheet, wherein spacer means comprising a substantially moisture-impermeable component is provided between the peripheral wall and the apertured member.

The apertured member may comprise a perforated sheet or a lattice arrangement, of metal, ceramic or other suitable refractory material.

Spacer means may be provided between the covering sheet and the peripheral wall and/or between the covering sheet and the apertured member.

The substantially moisture-impermeable component may be of a ceramic material. Such component may be of ring or sheet form.

The peripheral wall may have an apex.

The peripheral wall and optionally the base layer may comprise microporous thermal insulation material.

The peripheral wall may be provided integral with the base layer.

The base layer and the peripheral wall may be provided in a dish-like support, such as of metal.

The glass and/or ceramic filaments may be of woven, knitted or mat form in the fabric.

The at least one heating element may comprise one or more heating elements of wire, ribbon, foil or lamp form.

The present invention also provides an oven provided with the aforementioned radiant electric heater.

As a result of the provision of the spacer means, any moisture which comes into contact with the apertured member is prevented from being transferred to and absorbed by the peripheral wall of the heater. Consequential damage to the material, such as microporous thermal insulation material, of the peripheral wall is thereby prevented. Such moisture may result from condensation, on the apertured member, of water vapour emitted by food being heated by other means, such as microwave radiation or convection heating, in an oven containing the radiant electric heater in an unenergised state.

For a better understanding of the invention and to show more clearly how it may be carried into effect, reference will now be made, by way of example, to the accompanying drawings in which:

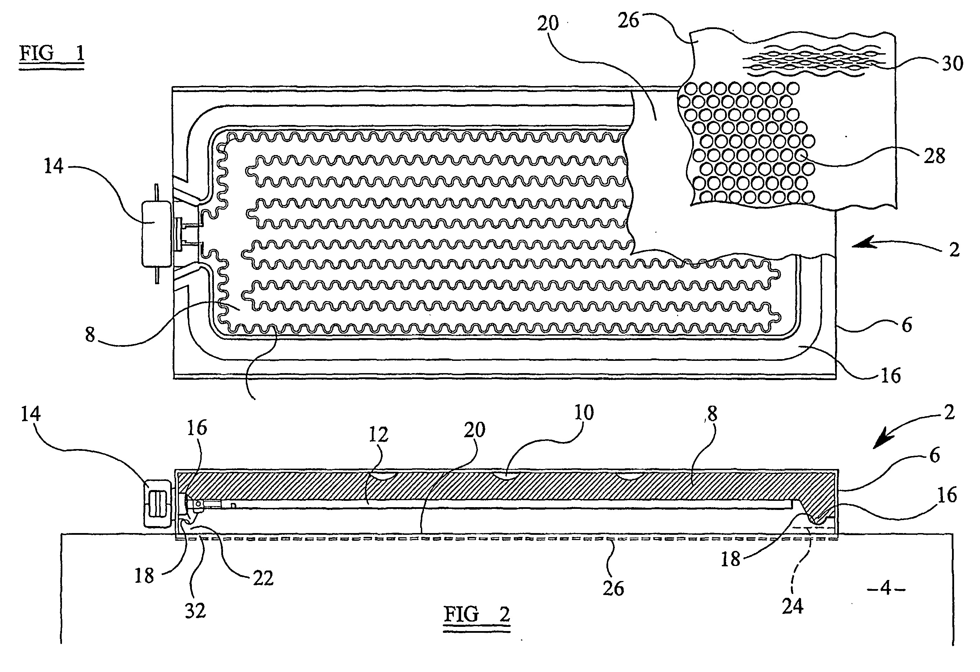

Figure 1 is a plan view of an embodiment of a radiant electric heater according to the present invention; and
Figure 2 is a cross-sectional view of the heater of Figure 1 installed in an oven.

Referring to the drawings, a radiant electric heater 2, installed in a wall of an oven 4, such as a microwave oven, comprises a metal dish-like support 6 provided with a base layer 8 of compacted microporous thermal and electrical insulation material. As shown in Figure 2, the dish-like support 6 is formed with a plurality of depressed regions 10 of arcuate form which permit the material of the base layer 8 to engage around the arcuate portions to assist in securing the base layer 8 in the dish-like support 6.

A heating element 12 is provided secured to the base layer 8. As shown, the heating element 12 comprises a corrugated metal ribbon mounted edgewise on the base layer 8. Such a heating element is well known to the skilled person. The heating element 12 could instead be of coiled wire form, or of other ribbon form, or of foil form, or of lamp form, or of any other suitable form known to the skilled person. More than one heating element, or more than one form of heating element, could be provided in the heater.

A terminal block 14 for the heating element 12 is mounted on the heater and allows the heater to be connected to a voltage supply for operation.

A peripheral wall 16 of microporous thermal insulation material is provided in the heater and has an apex 18. As shown, this wall 16 is integral with the base layer 8. However, it could be provided as a separate member, as is well known in the art.

A covering sheet 20 of a fabric comprising glass and/or ceramic filaments, is provided overlying the heater, including the apex 18 of the peripheral wall 16, and spaced from the heating element 12. Such covering sheet 20 is suitably secured to the metal dish-like support 6 and such that the covering sheet 20 is not in direct contact with the apex 18 of the peripheral wall 16.

Spacer means is provided to ensure that the covering sheet 20 is not in direct contact with the apex 18 of the peripheral wall 16. Such spacer means suitably comprises a substantially moisture-impermeable component 24, such as of a ceramic material, and suitably of flat ring or sheet form, provided between the covering sheet 20 and the apex 18 of the peripheral wall 16.

The covering sheet 20 suitably comprises glass and/or ceramic filaments woven, knitted or matted to form a fabric.

Suitable materials for the covering sheet 20 are described in GB-A-2 331 688.

The fabric of the covering sheet 20 may comprise filaments of E glass, C glass, R glass or S glass or modifications thereof. For example, the boron oxide in E glass may be replaced by magnesium oxide, such a glass being commercially available, under the trade name Advantex, from OCF Corporation.

Alternatively the covering sheet 20 may comprise a fabric of alumino-silicate filaments, or of alumino-boro-silicate filaments, or of zirconia cloth.

In general, the weight per unit area of the covering sheet 20 should be less than 1 kilogram per square metre and typically in a range from 50 to 300 grams per square metre.

The covering sheet 20 is arranged to be at least partially translucent to allow transmission therethrough of visible and infra-red radiation from the heating element 12.

The covering sheet 20 serves to prevent any splattered food particulates from entering the heater 2 during heating of food in the oven 4. It also serves to prevent any loose thermal insulation material of the base layer 8 from falling into the oven 4 and contaminating food being cooked therein. This is particularly relevant when the heater 2 is installed in a top wall of the oven 4.

An apertured sheet 26 is provided overlying the covering sheet 20. Such apertured sheet 26 may serve more than one purpose. It may provide protection for the covering sheet 20 and may also minimise risk of manual contact with internal components of the heater 2, such as when cleaning the inside of the oven 4 or when using cooking implements inside the oven. The apertured sheet 26 is most suitably of metal, but may comprise a ceramic or any suitably apertured refractory material. When of metal, the apertured sheet 26 can be used to provide electrical screening, such as in respect of microwave radiation generated when the oven 4 is a microwave oven.

The apertured sheet 26 can comprise perforations 28 in a metal or ceramic sheet or the sheet can be of expanded metal form 30, or other appropriate lattice form.

The oven 4 may include other heating means (not shown) in addition to the heater 2. Such other heating means may comprise microwave radiation heating means, or convection heating means. When one of these other heating means is operated alone without the heater 2 being energised, the heater 2, the covering sheet 20 and the apertured sheet 26 remain relatively cool while a food item in the oven 4 is being heated. Water vapour, such as in the form of steam, issues from the food item and condenses on the relatively cool surface of the apertured sheet 26. It also passes through the apertures in the apertured sheet 26 and condenses on the inside surface of the sheet.

If the apertured sheet 26 is in contact with the covering sheet 20 of fabric material, the resulting moisture is readily wicked along and through the covering sheet 20. If the covering sheet 20 had been arranged in contact with the apex 18 of the peripheral wall 16 of microporous thermal insulation material, the moisture would have been absorbed by the microporous insulation material from the covering sheet 20. Such absorbed moisture would have resulted in permanent damage to the structure of the microporous insulation material of the peripheral wall 16. However, the provision of the spacer means of the present invention, comprising the substantially moisture-impermeable component 24 such as in the form of a flat ring or sheet of ceramic, prevents such moisture being transferred from the covering sheet 20 to the peripheral wall 16.

In an alternative embodiment of the present invention, instead of or in addition to the spacer means 24 being provided between the covering sheet 20 and the apex 18 of the peripheral wall 16, spacer means 32 is provided between the apertured sheet 26 and the covering sheet 20. Such spacer means is a substantially moisture-impermeable component, such as of a ceramic and suitably of ring or sheet form. Such spacer means 32 prevents contact, and hence transfer of moisture, between the apertured sheet 26 and the covering sheet 20. With this arrangement, the covering sheet 20 could be in contact with the apex 18 of the peripheral wall 16.

## Claims

1. A radiant electric heater (2) comprising: a base layer (8) of thermal insulation material; at least one heating element (12) supported relative to the base layer (8); a peripheral wall (16) of thermal insulation material; a covering sheet (20) of fabric material overlying the at least one heating element (12) and the peripheral wall (16); and an apertured member (26) overlying the covering sheet (20), **characterised in that** spacer means (24; 32) comprising a substantially moisture-impermeable component (24) is provided between the peripheral wall (16) and the apertured member (26).

2. A radiant electric heater as claimed in claim 1, **characterised in that** the apertured member (26) comprises a perforated sheet (28) of material selected from metal, ceramic and other suitable refractory material.

3. A radiant electric heater as claimed in claim 1, **characterised in that** the apertured member (26) comprises a lattice arrangement (30) of material selected from metal, ceramic and other suitable refractory material.

4. A radiant electric heater as claimed in claim 1, 2 or 3, **characterised in that** the spacer means (24) is provided between the covering sheet (20) and the peripheral wall (16).

5. A radiant electric heater as claimed in any preceding claim, **characterised in that** the spacer means (32) is provided between the covering sheet (20) and the apertured member (26).

6. A radiant electric heater as claimed in any preceding claim, **characterised in that** the component (24) comprises a ceramic material, for example of ring and/or sheet form.

7. A radiant electric heater as claimed in any preceding claim, **characterised in that** the peripheral wall (16) has an apex (18).

8. A radiant electric heater as claimed in any preceding claim, **characterised in that** the peripheral wall (16) comprises microporous thermal insulation material.

9. A radiant electric heater as claimed in any preceding claim, **characterised in that** the base layer (8) comprises microporous thermal insulation material.

10. A radiant electric heater as claimed in any preceding claim, **characterised in that** the peripheral wall (16) is integral with the base layer (8).

11. A radiant electric heater as claimed in any preceding claim, **characterised in that** the base layer (8) and the peripheral wall (16) are provided in a dish-like support (6), for example of metal.

12. A radiant electric heater as claimed in any preceding claim, **characterised in that** the fabric of the covering sheet (20) is, for example, selected from glass and ceramic filaments, for example of a form selected from woven, knitted and mat form in the fabric.

13. A radiant electric heater as claimed in any preceding claim, **characterised in that** the at least one heating element (12) comprises heating elements selected from wire, ribbon, foil and lamp form.

## Patentansprüche

1. Elektrische Strahlungsheizung (2), die Folgendes umfasst: eine Basislage (8) aus Wärmeisoliermaterial; wenigstens ein Heizelement (12), das relativ zu der Basislage (8) abgestützt wird; eine Umfangswand (16) aus Wärmeisoliermaterial; eine Abdeckfolie (20) aus einem Gewebematerial, die über dem wenigstens einen Heizelement (12) und der Umfangswand (16) liegt; und ein gelochtes Element (26), das über der Abdeckfolie (20) liegt, **dadurch gekennzeichnet, dass** Abstandshalter (24; 32), die eine im Wesentlichen feuchtigkeitsundurchlässige Komponente (24) umfassen, zwischen der Umfangswand (16) und dem gelochten Element (26) vorgesehen sind.

2. Elektrische Strahlungsheizung nach Anspruch 1, **dadurch gekennzeichnet, dass** das gelochte Element (26) ein perforiertes Blech (28) aus einem Material umfasst, das ausgewählt ist aus Metall, Keramik oder einem anderen geeigneten feuerfesten Material.

3. Elektrische Strahlungsheizung nach Anspruch 1, **dadurch gekennzeichnet, dass** das gelochte Element (26) eine Gitteranordnung (30) aus einem Material umfasst, das ausgewählt ist aus Metall, Keramik oder einem anderen geeigneten feuerfesten Material.

4. Elektrische Strahlungsheizung nach Anspruch 1, 2 oder 3, **dadurch gekennzeichnet, dass** der Abstandshalter (24) zwischen der Abdeckfolie (20) und der Umfangswand (16) vorgesehen ist.

5. Elektrische Strahlungsheizung nach einem der vorherigen Ansprüche, **dadurch gekennzeichnet, dass** der Abstandshalter (32) zwischen der Abdeckfolie (20) und dem gelochten Element (26) vorgesehen ist.

6. Elektrische Strahlungsheizung nach einem der vorherigen Ansprüche, **dadurch gekennzeichnet, dass** die Komponente (24) ein Keramikmaterial wie z.B. in Ringund/oder Plattenform umfasst.

7. Elektrische Strahlungsheizung nach einem der vorherigen Ansprüche, **dadurch gekennzeichnet, dass** die Umfangswand (16) einen Scheitelpunkt (18) hat.

8. Elektrische Strahlungsheizung nach einem der vorherigen Ansprüche, **dadurch gekennzeichnet, dass** die Umfangswand (16) mikroporöses Wärmeisoliermaterial umfasst.

9. Elektrische Strahlungsheizung nach einem der vorherigen Ansprüche, **dadurch gekennzeichnet, dass** die Basislage (8) mikroporöses Wärmeisoliermaterial umfasst.

10. Elektrische Strahlungsheizung nach einem der vorherigen Ansprüche, **dadurch gekennzeichnet, dass** die Umfangswand (16) einstückig mit der Basislage (8) ausgebildet ist.

11. Elektrische Strahlungsheizung nach einem der vorherigen Ansprüche, **dadurch gekennzeichnet, dass** die Basislage (8) und die Umfangswand (16) in einer schüsselähnlichen Auflage (6) wie z.B. aus Metall vorgesehen sind.

12. Elektrische Strahlungsheizung nach einem der vorherigen Ansprüche, **dadurch gekennzeichnet, dass** das Gewebe der Abdeckfolie (20) beispielsweise aus Glas- und Keramikfilamenten ausgewählt ist, beispielsweise in einer Form, die aus einer Web-, Strick- und Mattenform in dem Gewebe ausgewählt ist.

13. Elektrische Strahlungsheizung nach einem der vorherigen Ansprüche, **dadurch gekennzeichnet, dass** das wenigstens eine Heizelement (12) Heizelemente umfasst, die ausgewählt sind aus einer Draht-, Band-, Folien- und Lampenform.

## Revendications

1. Un dispositif de chauffage électrique radiant (2) qui comprend une couche de base (8) en un matériau calorifuge ; au moins un élément chauffant (12) supporté relativement à la couche de base (8) ; une paroi périphérique (16) en matériau calorifuge ; une feuille de couverture (20) en un matériau textile qui recouvre l'élément chauffant (12) (un au moins) et la paroi périphérique (16) ; et un élément pourvu d'ouvertures (26) qui recouvre la feuille de couverture (20), **caractérisé en ce que** des moyens d'écartement (24 ; 32) qui comprennent une pièce sensiblement imperméable à l'humidité (24) sont prévus entre la paroi périphérique (16) et l'élément pourvu d'ouvertures (26).

2. Un dispositif de chauffage électrique radiant selon la revendication 1, **caractérisé en ce que** l'élément pourvu d'ouvertures (26) comprend une feuille perforée (28) en un matériau sélectionné parmi des métaux, des céramiques et d'autres matériaux réfractaires appropriés.

3. Un dispositif de chauffage électrique radiant selon la revendication 1, **caractérisé en ce que** l'élément pourvu d'ouvertures (26) se compose d'un arrangement en treillis (30) d'un matériau sélectionné parmi des métaux, des céramiques et d'autres matériaux réfractaires appropriés.

4. Un dispositif de chauffage électrique radiant selon la revendication 1, 2 ou 3, **caractérisé en ce que** les moyens d'écartement (24) sont placés entre la feuille de couverture (20) et la paroi périphérique (16).

5. Un dispositif de chauffage électrique radiant selon l'une quelconque des revendications précédentes, **caractérisé en ce que** les moyens d'écartement (32) sont prévus entre la feuille de couverture (20) et l'élément pourvu d'ouvertures (26).

6. Un dispositif de chauffage électrique radiant selon l'une quelconque des revendications précédentes, **caractérisé en ce que** la pièce (24) se compose d'un matériau en céramique de forme annulaire et/ou en feuille, par exemple.

7. Un dispositif de chauffage électrique radiant selon l'une quelconque des revendications précédentes, **caractérisé en ce que** la paroi périphérique (16) a un sommet (18).

8. Un dispositif de chauffage électrique radiant selon l'une quelconque des revendications précédentes, **caractérisé en ce que** la paroi périphérique (16) comprend un matériau calorifuge microporeux.

9. Un dispositif de chauffage électrique radiant selon l'une quelconque des revendications précédentes, **caractérisé en ce que** la couche de base (8) se compose d'un matériau calorifuge microporeux.

10. Un dispositif de chauffage électrique radiant selon l'une quelconque des revendications précédentes, **caractérisé en ce que** la paroi périphérique (16) fait partie intégrante de la couche de base (8).

11. Un dispositif de chauffage électrique radiant selon l'une quelconque des revendications précédentes, **caractérisé en ce que** la couche de base (8) et la paroi périphérique (16) sont placées à l'intérieur d'un support (6) en forme de cuvette, réalisé en métal par exemple.

12. Un dispositif de chauffage électrique radiant selon l'une quelconque des revendications précédentes, **caractérisé en ce que** le tissu de la feuille de couverture (20) est sélectionné, par exemple, parmi des filaments de verre ou de céramique dont la forme est, par exemple, sélectionnée parmi des formes tissées, tricotées et de mat mat dans le tissu.

13. Un dispositif de chauffage électrique radiant selon l'une quelconque des revendications précédentes, **caractérisé en ce que** l'élément chauffant (12) (1 au moins) comprend des éléments chauffants sélectionnés parmi des formes de fil, de ruban, de feuille et de lampe.
